(19) Europäisches Patentamt
European Patent Office
Office européen des brevets

(11) EP 4 474 408 A2

(12) **EUROPEAN PATENT APPLICATION**

(43) Date of publication:
**11.12.2024 Bulletin 2024/50**

(21) Application number: **24209294.8**

(22) Date of filing: **30.12.2020**

(51) International Patent Classification (IPC):
***C08H 7/00*** *(2011.01)*

(52) Cooperative Patent Classification (CPC):
**C08H 6/00; C03C 3/062; C03C 3/087; C03C 13/06; C03C 25/32; C03C 25/321; C03C 25/34; C07G 1/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.04.2020 PCT/EP2020/059651**

(62) Document number(s) of the earlier application(s) in accordance with Art. 76 EPC:
**20841962.2 / 4 127 028**

(71) Applicant: **ROCKWOOL A/S**
**2640 Hedehusene (DK)**

(72) Inventors:
- **BARTNIK JOHANSSON, Dorte**
**2640 Hedehusene (DK)**
- **NIKOLIC, Miroslav**
**2640 Hedehusene (DK)**

(74) Representative: **Meissner Bolte Partnerschaft mbB**
**Patentanwälte Rechtsanwälte**
**Postfach 86 06 24**
**81633 München (DE)**

Remarks:
This application was filed on 28-10-2024 as a divisional application to the application mentioned under INID code 62.

(54) **AQUEOUS BINDER COMPOSITION**

(57) The invention is directed to an aqueous binder composition free of phenol and formaldehyde.

**Fig. 1**

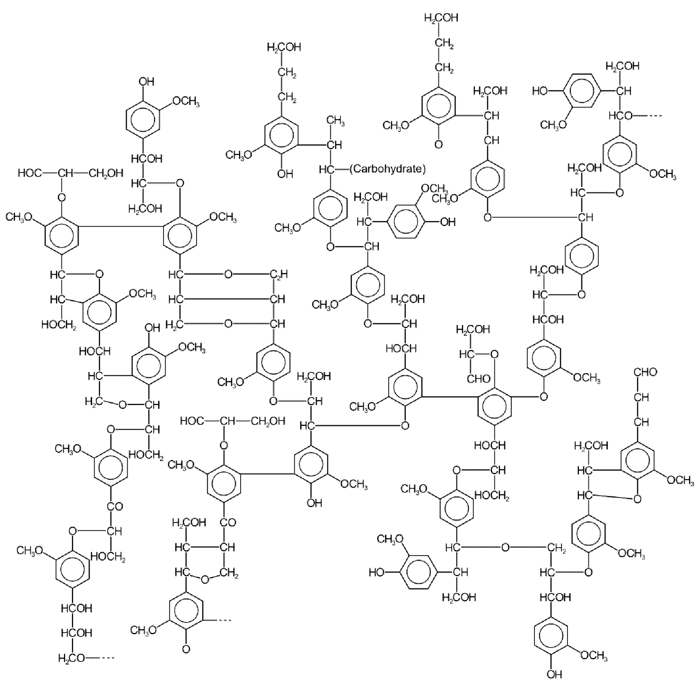

EP 4 474 408 A2

## Description

### Field of the invention

The present invention relates to an aqueous binder composition for mineral fibres, a method for producing a bonded mineral fibre product using said binder, a mineral fibre product comprising mineral fibres in contact with a cured binder, and the use of a lignin component for the preparation of a binder composition.

### Background of the invention

Mineral fibre products generally comprise man-made vitreous fibres (MMVF) such as, e.g., glass fibres, ceramic fibres, basalt fibres, slag wool, mineral wool and stone wool, which are bonded together by a cured thermoset polymeric binder material. For use as thermal or acoustical insulation products, bonded mineral fibre mats are generally produced by converting a melt made of suitable raw materials to fibres in conventional manner, for instance by a spinning cup process or by a cascade rotor process. The fibres are blown into a forming chamber and, while airborne and while still hot, are sprayed with a binder solution and randomly deposited as a mat or web onto a travelling conveyor. The fibre mat is then transferred to a curing oven where heated air is blown through the mat to cure the binder and rigidly bond the mineral fibres together.

In the past, the binder resins of choice have been phenol-formaldehyde resins which can be economically produced and can be extended with urea prior to use as a binder. However, the existing and proposed legislation directed to the lowering or elimination of formaldehyde emissions have led to the development of formaldehyde-free binders such as, for instance, the binder compositions based on polycarboxy polymers and polyols or polyamines, such as disclosed in EP-A-583086, EP-A-990727, EP-A-1741726, US-A-5,318,990 and US-A-2007/0173588.

Another group of non-phenol-formaldehyde binders are the addition/-elimination reaction products of aliphatic and/or aromatic anhydrides with alkanolamines, e.g., as disclosed in WO 99/36368, WO 01/05725, WO 01/96460, WO 02/06178, WO 2004/007615 and WO 2006/061249. These binder compositions are water soluble and exhibit excellent binding properties in terms of curing speed and curing density. WO 2008/023032 discloses urea-modified binders of that type which provide mineral wool products having reduced moisture take-up.

Since some of the starting materials used in the production of these binders are rather expensive chemicals, there is an ongoing need to provide formaldehyde-free binders which are economically produced.

A further effect in connection with previously known aqueous binder compositions from mineral fibres is that at least the majority of the starting materials used for the productions of these binders stem from fossil fuels. There is an ongoing trend of consumers to prefer products that are fully or at least partly produced from renewable materials and there is therefore a need to provide binders for mineral wool which are, at least partly, produced from renewable materials.

A further effect in connection with previously known aqueous binder compositions for mineral fibres is that they involve components which are corrosive and/or harmful. This requires protective measures for the machinery involved in the production of mineral wool products to prevent corrosion and also requires safety measures for the persons handling this machinery. This leads to increased costs and health issues and there is therefore a need to provide binder compositions for mineral fibres with a reduced content of corrosive and/or harmful materials.

In recent times, a number of binders for mineral fibres have been provided, which are to a large extend based on renewable starting materials. In many cases these binder based to a large extent on renewable resources are also formaldehyde-free.

However, many of these binders are still comparatively expensive because they are based on comparatively expensive basic materials.

In the meantime, binders for mineral fibres have been provided, which are based on lignin components which have been oxidised in order to make them suitable as components of a binder composition for mineral wool. While very good binding properties are achieved by these mineral wool binders based on pre-oxidised lignins, the preparation of such binders still requires the extra step of oxidising the lignin components before they can be used as components for the binder compositions. This pre-oxidation step necessary for utilising the lignin components complicates the production process for such binders to a certain extent by increasing the reaction time, reducing the output and increases the costs for such binders due to extra cost for raw materials, process equipment and manning.

### Summary of the invention

Accordingly, it was an object of the present invention to provide a binder composition which is particularly suitable for bonding mineral fibres, uses renewable materials as starting materials, reduces or eliminates corrosive and/or harmful materials, and is inexpensive and fast to produce.

A further object of the present invention was to provide a mineral wool product bonded with such a binder

composition.

A further object of the present invention was to provide a method of making such a mineral wool product.

Further the present invention provides the use of a lignin component for the preparation of a binder composition for mineral wool.

In accordance with a first aspect of the present invention, there is provided an aqueous binder composition, preferably free of phenol and formaldehyde, having a pH of ≥ 8 for mineral fibres comprising:

- a component (i) in form of one or more kraft lignins and having a carboxylic acid group content of 0.03 to 2.0 mmol/g, such as 0.03 to 0.9 mmol/g, such as 0.15 to 0.9 mmol/g, based on the dry weight of the kraft lignins;
- a component (ii) in form of one or more cross-linkers;
- a component (iii) in form of one or more plasticizers.

In particular, in accordance with a first aspect of the present invention, there is provided an aqueous binder composition, preferably free of phenol and formaldehyde, having a pH of ≥ 8 for mineral fibres comprising:

- a component (i) in form of one or more kraft lignins and having a carboxylic acid group content of 0.03 to 2.0 mmol/g, such as 0.03 to 0.9 mmol/g, such as 0.15 to 0.9 mmol/g, based on the dry weight of the kraft lignins;
- a component (ii) in form of one or more cross-linkers;
- a component (iii) in form of one or more plasticizers,

with the proviso that the composition does not comprise a cross-linker selected from epoxy compounds having a molecular weight $M_W$ of 500 or less.

In accordance with a second aspect of the present invention, there is provided a method of producing a bonded mineral fibre product which comprises the step of contacting the mineral fibres with the aqueous binder composition described above.

In accordance with a third aspect of the present invention, there is provided a mineral wool product, comprising mineral fibres in contact with the cured binder composition according to the present invention.

In accordance with a fourth aspect of the present invention, there is provided a use of a lignin component in form of one or more kraft lignins and having a carboxylic acid group content of 0.03 to 2.0 mmol/g, such as 0.03 to 0.9 mmol/g, such as 0.15 to 0.9 mmol/g, based on the dry weight of the kraft lignins, for the preparations of a binder composition for mineral wool.

In particular, according with the fourth aspect of the present invention, there is provided a use of a lignin component in form of one or more kraft lignins and having a carboxylic acid group content of 0.03 to 2.0 mmol/g, such as 0.03 to 0.9 mmol/g, such as 0.15 to 0.9 mmol/g, based on the dry weight of the kraft lignins for the preparations of a binder composition for mineral wool with the proviso that the composition does not comprise a cross-linker selected from epoxy compounds having a molecular weight $M_W$ of 500 or less.

The present inventors have surprisingly found that it is possible to obtain a mineral wool product comprising mineral fibres bound by a binder resulting from the curing of a binder composition, whereby the binder composition can be produced from inexpensive renewable materials, in form of a lignin component, which does not require an oxidation step previous to the use in the binder composition, to a large degree, does not contain, or contains only to a minor degree, any corrosive and/or harmful agents.

**Description of the preferred embodiments**

In accordance with a first aspect of the present invention, there is provided an aqueous binder composition, preferably free of phenol and formaldehyde, having a pH of ≥ 8 for mineral fibres comprising:

- a component (i) in form of one or more kraft lignins and having a carboxylic acid group content of 0.03 to 2.0 mmol/g, such as 0.03 to 0.9 mmol/g, such as 0.15 to 0.9 mmol/g, based on the dry weight of the kraft lignins;
- a component (ii) in form of one or more cross-linkers;
- a component (iii) in form of one or more plasticizers.

In particular, in accordance with a first aspect of the present invention, there is provided an aqueous binder composition, preferably free of phenol and formaldehyde, having a pH of ≥ 8 for mineral fibres comprising:

- a component (i) in form of one or more kraft lignins and having a carboxylic acid group content of 0.03 to 2.0 mmol/g, such as 0.03 to 0.9 mmol/g, such as 0.15 to 0.9 mmol/g, based on the dry weight of the kraft lignins;
- a component (ii) in form of one or more cross-linkers;

- a component (iii) in form of one or more plasticizers,

with the proviso that the composition does not comprise a cross-linker selected from epoxy compounds having a molecular weight $M_W$ of 500 or less.

In a preferred embodiment, the binders according to the present invention are formaldehyde free.

For the purpose of the present application, the term "formaldehyde free" is defined to characterize a mineral wool product where the emission is below 5 $\mu g/m^2/h$ of formaldehyde from the mineral wool product, preferably below 3 $\mu g/m^2/h$. Preferably, the test is carried out in accordance with ISO 16000 for testing aldehyde emissions.

In a preferred embodiment, the binders according to the present invention are phenol free.

For the purpose of the present application, the term "phenol free" is defined in such a way that the aqueous binder composition does contain phenol

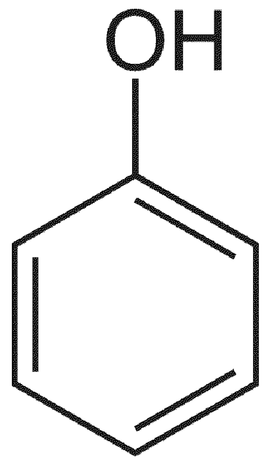

in an amount of ≤ 0.25 wt.-%, such as ≤ 0.1 wt.-%, such as ≤ 0.05 wt.-%, based on the total weight of an aqueous composition having a dry solids binder content of 15 wt.%.

In one embodiment, the binder composition does not contain added formaldehyde.

In one embodiment, the binder composition does not contain added phenol.

**Component (i)**

Component (i) is in form of one or more kraft lignins and having a carboxylic acid group content of 0.03 to 2.0 mmol/g, such as 0.03 to 0.9 mmol/g, such as 0.15 to 2.0 mmol/g, such as 0.15 to 0.9 mmol/g, based on the dry weight of the kraft lignins.

Lignin, cellulose and hemicellulose are the three main organic compounds in a plant cell wall. Lignin can be thought of as the glue, that holds the cellulose fibres together. Lignin contains both hydrophilic and hydrophobic groups. It is the second most abundant natural polymer in the world, second only to cellulose, and is estimated to represent as much as 20-30% of the total carbon contained in the biomass, which is more than 1 billion tons globally.

Fig. 1 shows a section from a possible lignin structure.

The kraft process introduces thiol groups, stilbene while some carbohydrates remain. Sodium sulphate is also present as an impurity due to precipitation of lignin from liquor with sulphuric acid but can potentially be avoided by altering the way lignin is isolated. The kraft process leads to high amount of phenolic hydroxyl groups and this lignin is soluble in water when these groups are ionized (above pH~10).

Commercial kraft lignins are generally higher in purity than lignosulfonates. The number average molecular weights are 800-6000 g/mol.

In one embodiment, component (i) is having a carboxylic acid group content of 0.15 to 0.6 mmol/g, based on the dry weight of the kraft lignins.

In one embodiment, component (i) is in form of one or more kraft lignins having an average carboxylic acid group content of less than 1.8 groups per macromolecule considering the M_n wt. average of component (i), such as ...less than 1.4 such as less than 1.1 such as less than 0.7.

In one embodiment, component (i) is having a nitrogen-content of ≤ 1.2 wt.-%, such as ≤ 0.5 wt.-%, such as ≤ 0.3 wt.-%, based on the dry weight of component (i).

In one embodiment, component (i) is having a content of phenolic OH groups of 2.0 to 5.0 mmol/g, such as 2.0 to 4.0 mmol/g, such as 2.5 to 3.5 mmol/g, based on the dry weight of the kraft lignins.

In one embodiment, component (i) is having a content of aliphatic OH groups of 0.7 to 3.0 mmol/g such as 0.7 to 2.5 mmol/g such as 1.0 to 2.0 mmol/g, based on the dry weight of the kraft lignins.

In one embodiment, the aqueous binder composition comprises component (i) in an amount of 50 to 98 wt.-%, such as 65 to 98 wt.-%, such as 80 to 98 wt.-%, based on the dry weight of components (i), (ii), and (iii).

For the purpose of the present invention, content of lignin functional groups is determined by using $^{31}$P NMR as characterization method.

Sample preparation for $^{31}$P NMR is performed by using 2-chloro-4,4,5,5-tetramethyl-1,3,2-dioxaphospholane (TMDP) as phosphitylation reagent and cholesterol as internal standard. Integration is according to the work of Granata and Argyropoulos (J. Agric. Food Chem. 43:1538-1544.).

For the purpose of the present invention, number average molecular weight is determined by utilizing UV detector at 280nm wavelength with 0.1M NaOH as eluent and set of polystyrene sulfonate standards.

**Component (ii)**

Component (ii) is in form of one or more cross-linkers.

In one embodiment, the component (ii) comprises in one embodiment one or more cross-linkers selected from β-hydroxyalkylamide-cross-linkers and/or oxazoline-cross-linkers.

β-hydroxyalkylamide-cross-linkers is a curing agent for the acid-functional macromolecules. It provides a hard, durable, corrosion resistant and solvent resistant cross-linked polymer network. It is believed the β-hydroxyalkylamide cross-linkers cure through esterification reaction to form multiple ester linkages. The hydroxy functionality of the β-hydroxyalkylamide-cross-linkers should be an average of at least 2, preferably greater than 2 and more preferably 2-4 in order to obtain optimum curing response.

Oxazoline group containing cross-linkers are polymers containing one of more oxazoline groups in each molecule and generally, oxazoline containing cross-linkers can easily be obtained by polymerizing an oxazoline derivative. The patent US 6 818 699 B2 provides a disclosure for such a process.

In one embodiment, component (ii) is one or more cross-linkers selected from the group consisting of multifunctional organic amines such as an alkanolamine, diamines, such as hexamethyldiamine.

In one embodiment, the component (ii) is one or more epoxy compounds having a molecular weight of more than 500, such as an epoxidised oil based on fatty acid triglyceride or one or more flexible oligomer or polymer, such as a low Tg acrylic based polymer, such as a low Tg vinyl based polymer, such as low Tg polyether, which contains reactive functional groups such as carbodiimide groups, such as anhydride groups, such as oxazoline groups, such as amino groups, such as epoxy groups, such as β-hydroxyalkylamide groups.

In one embodiment, component (ii) is one or more cross-linkers selected from the group consisting of polyethylene imine, polyvinyl amine, fatty amines.

In one embodiment, component (ii) is one more cross-linkers in form of fatty amides.

In one embodiment, component (ii) is one or more cross-linkers selected from the group consisting of dimethoxyethanal, glycolaldehyde, glyoxalic acid.

In one embodiment, component (ii) is one or more cross-linkers selected from polyester polyols, such as polycaprolactone.

In one embodiment, component (ii) is one or more cross-linkers selected from the group consisting of starch, modified starch, CMC.

In one embodiment, component (ii) is one or more cross-linkers in form of multifunctional carbodiimides, such as aliphatic multifunctional carbodiimides.

In one embodiment, the component (ii) is one or more cross-linkers in form of aziridines, such as CX100, NeoAdd-Pax 521/523.

In one embodiment, component (ii) is one or more cross-linkers selected from melamine based cross-linkers, such as a hexakis(methylmethoxy)melamine (HMMM) based cross-linkers.

Examples of such compounds are Picassian XL 701, 702, 725 (Stahl Polymers), such as ZOLDINE® XL-29SE (Angus Chemical Company), such as CX300 (DSM), such as Carbodilite V-02-L2 (Nisshinbo Chemical Inc.).

In one embodiment, component (ii) is Primid XL552, which has the following structure:

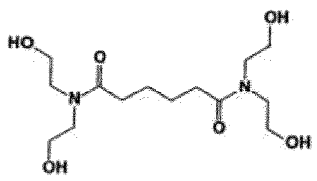

Primid XL-552

Component (ii) can also be any mixture of the above mentioned compounds.

In one embodiment, the binder composition according to the present invention comprises component (ii) in an amount of 1 to 50 wt.-%, such as 4 to 20 wt.-%, such as 6 to 12 wt.-%, based on the dry weight of component (i).

**Component (iii) of the binder composition**

Optionally and preferably, the binder composition may comprise a component (iii). Component (iii) is in form of one or more plasticizers.

In one embodiment, component (iii) is in form of one or more plasticizers selected from the group consisting of polyols, such as carbohydrates, hydrogenated sugars, such as sorbitol, erythriol, glycerol, monoethylene glycol, polyethylene glycols, polyethylene glycol ethers, polyethers, phthalates and/or acids, such as adipic acid, vanillic acid, lactic acid and/or ferullic acid, acrylic polymers, polyvinyl alcohol, polyurethane dispersions, ethylene carbonate, propylene carbonate, lactones, lactams, lactides, acrylic based polymers with free carboxy groups and/or polyurethane dispersions with free carboxy groups, polyamides, amides such as carbamide/urea, or any mixtures thereof.

In one embodiment, component (iii) is in form of one or more plasticizers selected from the group consisting of carbonates, such as ethylene carbonate, propylene carbonate, lactones, lactams, lactides, compounds with a structure similar to lignin like vanillin, acetosyringone, solvents used as coalescing agents like alcohol ethers, polyvinyl alcohol.

In one embodiment, component (iii) is in form of one or more non-reactive plasticizer selected from the group consisting of polyethylene glycols, polyethylene glycol ethers, polyethers, hydrogenated sugars, phthalates and/or other esters, solvents used as coalescing agents like alcohol ethers, acrylic polymers, polyvinyl alcohol.

In one embodiment, component (iii) is one or more reactive plasticizers selected from the group consisting of carbonates, such as ethylene carbonate, propylene carbonate, lactones, lactams, lactides, di- or tricarboxylic acids, such as adipic acid, or lactic acid, and/or vanillic acid and/or ferullic acid, polyurethane dispersions, acrylic based polymers with free carboxy groups, compounds with a structure similar to lignin like vanillin, acetosyringone.

In one embodiment, component (iii) is in form of one or more plasticizers selected from the group consisting of fatty alcohols, monohydroxy alcohols such as pentanol, stearyl alcohol.

In one embodiment, component (iii) comprises one or more plasticizers selected from the group consisting of polyethylene glycols, polyethylene glycol ethers, and/or triethanolamine.

Another particular surprising aspect of the present invention is that the use of plasticizers having a boiling point of more than 100 °C, in particular 140 to 320 °C, strongly improves the mechanical properties of the mineral fibre products according to the present invention although, in view of their boiling point, it is likely that these plasticizers will at least in part evaporate during the curing of the binders in contact with the mineral fibres.

In one embodiment, component (iii) comprises one or more plasticizers having a boiling point of more than 100 °C, such as 100 to 380 °C, such as 110 to 350 °C, more preferred 120 to 300 °C, more preferred 140 to 250 °C.

It is believed that the effectiveness of these plasticizers in the binder composition according to the present invention is associated with the effect of increasing the mobility of the lignins during the curing process. It is believed that the increased mobility of the lignins during the curing process facilitates the effective crosslinking. It is also believed that presence of plasticizer prevents loss of adhesion to the fibers in the initial stages of the curing by keeping the lignin in the rubbery state (above its $T_g$).

In one embodiment, component (iii) comprises one or more polyethylene glycols having an average molecular weight of 150 to 50000 g/mol, in particular 150 to 4000 g/mol, more particular 150 to 1000 g/mol, preferably 150 to 500 g/mol, more preferably 200 to 400 g/mol.

In one embodiment, component (iii) comprises one or more polyethylene glycols having an average molecular weight of 4000 to 25000 g/mol, in particular 4000 to 15000 g/mol, more particular 8000 to 12000 g/mol.

In one embodiment component (iii) is capable of forming covalent bonds with component (i) and/or component (ii) during the curing process. Such a component would not evaporate and remain as part of the composition but will be effectively altered to not introduce unwanted side effects e.g. water absorption in the cured product. Non-limiting examples of such a component are caprolactone and acrylic based polymers with free carboxyl groups.

In one embodiment, component (iii) is selected from the group consisting of fatty alcohols, monohydroxy alcohols, such as pentanol, stearyl alcohol.

In one embodiment, component (iii) is selected from one or more plasticizers selected from the group consisting of alkoxylates such as ethoxylates such as butanol ethoxylates, such as butoxytriglycol.

In one embodiment, component (iii) is selected from one or more propylene glycols.

In one embodiment, component (iii) is selected from one or more glycol esters.

In one embodiment, component (iii) is selected from one or more plasticizers selected from the group consisting of adipates, acetates, benzoates, cyclobenzoates, citrates, stearates, sorbates, sebacates, azelates, butyrates, valerates.

In one embodiment, component (iii) is selected from one or more plasticizers selected from the group consisting of phenol derivatives such as alkyl or aryl substituted phenols.

In one embodiment, component (iii) is selected from one or more plasticizers selected from the group consisting of silanols, siloxanes.

In one embodiment, component (iii) is selected from one or more plasticizers selected from the group consisting of sulfates such as alkyl sulfates, sulfonates such as alkyl aryl sulfonates such as alkyl sulfonates, phosphates such as tripolyphosphates; such as tributylphosphates.

In one embodiment, component (iii) is selected from one or more hydroxy acids.

In one embodiment, component (iii) is selected from one or more plasticizers selected from the group consisting of monomeric amides such as acetamides, benzamide, fatty acid amides such as tall oil amides.

In one embodiment, component (iii) is selected from one or more plasticizers selected from the group consisting of quaternary ammonium compounds such as trimethylglycine, distearyldimethylammoniumchloride.

In one embodiment, component (iii) is selected from one or more plasticizers selected from the group consisting of vegetable oils such as castor oil, palm oil, linseed oil, tall oil, soybean oil.

In one embodiment, component (iii) is in form of tall oil.

In one embodiment, component (iii) is selected from one or more plasticizers selected from the group consisting of hydrogenated oils, acetylated oils.

In one embodiment, component (iii) is selected from one or more fatty acid methyl esters.

In one embodiment, component (iii) is selected from one or more plasticizers selected from the group consisting of alkyl polyglucosides, gluconamides, aminoglucoseamides, sucrose esters, sorbitan esters.

In one embodiment, component (iii) is selected from one or more plasticizers selected from the group consisting of polyethylene glycols, polyethylene glycol ethers.

In one embodiment, component (iii) is selected from one or more plasticizers in form of polyols, such as glycerol, such as 1,1,1-Tris(hydroxymethyl)propane.

In one embodiment, component (iii) is triethanolamine.

In one embodiment, component (iii) is in form of propylene glycols, phenol derivatives, silanols, siloxanes, hydroxy acids, vegetable oils, polyethylene glycols, polyethylene glycol ethers, triethanolamine, or any mixtures thereof.

It has surprisingly been found that the inclusion of plasticizers in the binder compositions according to the present invention strongly improves the mechanical properties of the mineral fibre products according to the present invention.

The term plasticizer refers to a substance that is added to a material in order to make the material softer, more flexible (by decreasing the glass-transition temperature Tg) and easier to process.

Component (iii) can also be any mixture of the above mentioned compounds.

In one embodiment, component (iii) is present in an amount of 0.5 to 60, preferably 2.5 to 25, more preferably 3 to 15 wt.-%, based on the dry weight of component (i).

In one embodiment, component (iii) is present in an amount of 0.5 to 60, preferably 2.5 to 25, more preferably 3 to 15 wt.-%, based on the dry weight of components (i), (ii), and (iii).

**Binder composition for mineral fibres comprising components (i) and (iia)**

In one embodiment the present invention is directed to a binder composition for mineral fibres comprising:

- a component (i) in form of one or more kraft lignins and having a carboxylic acid group content of 0.03 to 2.0 mmol/g, such as 0.03 to 0.9 mmol/g, such as 0.15 to 2.0 mmol/g, such as 0.15 to 0.9 mmol/g, based on the dry weight of the kraft lignins.
- a component (iia) in form of one or more modifiers,

preferably with the proviso that the composition does not comprise a cross-linker selected from epoxy compounds having a molecular weight $M_W$ of 500 or less.

The present inventors have found that the excellent binder properties can also be achieved by a two-component

system which comprises component (i) in form of one or more kraft lignins and having a carboxylic acid group content of 0.03 to 2.0 mmol/g, such as 0.03 to 0.9 mmol/g, such as 0.15 to 2.0 mmol/g, such as 0.15 to 0.9 mmol/g, based on the dry weight of the kraft lignins and a component (iia) in form of one or more modifiers, and optionally any of the other components mentioned above and below.

In one embodiment, component (iia) is a modifier in form of one or more compounds selected from the group consisting of epoxy compounds having a molecular weight of more than 500, such as an epoxidised oil based on fatty acid triglyceride or one or more flexible oligomer or polymer, such as a low Tg acrylic based polymer, such as a low Tg vinyl based polymer, such as low Tg polyether, which contains reactive functional groups such as carbodiimide groups, such as anhydride groups, such as oxazoline groups, such as amino groups, such as epoxy groups, such as β-hydroxyalkylamide groups.

In one embodiment, component (iia) is one or more modifiers selected from the group consisting of polyethylene imine, polyvinyl amine, fatty amines.

In one embodiment, the component (iia) is one or more modifiers selected from aliphatic multifunctional carbodiimides.

Component (iia) can also be any mixture of the above mentioned compounds.

Without wanting to be bound by any particular theory, the present inventors believe that the excellent binder properties achieved by the binder composition for mineral fibres comprising components (i) and (iia), and optional further components, are at least partly due to the effect that the modifiers used as components (iia) at least partly serve the function of a plasticizer and a cross-linker.

In one embodiment, the binder composition comprises component (iia) in an amount of 1 to 60 wt.-%, such as 4 to 20 wt.-%, such as 6 to 12 wt.-%, based on the dry weight of the component (i).

**Further components**

In some embodiments, the binder composition according to the present invention comprises further components.

In one embodiment, the binder composition according to the present invention comprises a catalyst selected from inorganic acids, such as sulfuric acid, sulfamic acid, nitric acid, boric acid, hypophosphorous acid, and/or phosphoric acid, and/or any salts thereof such as sodium hypophosphite, and/or ammonium salts, such as ammonium salts of sulfuric acid, sulfamic acid, nitric acid, boric acid, hypophosphorous acid, and/or phosphoric acid, and/or sodium polyphosphate (STTP), and/or sodium metaphosphate (STMP), and/or phosphorous oxychloride. The presence of such a catalyst can improve the curing properties of the binder compositions according to the present invention.

In one embodiment, the binder composition according to the present invention comprises a catalyst selected from Lewis acids, which can accept an electron pair from a donor compound forming a Lewis adduct, such as $ZnCl_2$, $Mg(ClO_4)_2$, $Sn[N(SO_2\text{-n-}C_8F_{17})_2]_4$.

In one embodiment, the binder composition according to the present invention comprises a catalyst selected from metal chlorides, such as KCl, $MgCl_2$, $ZnCl_2$, $FeCl_3$ and $SnCl_2$,or their adducts such as $AlCl_3$ adducts, such as $BF_3$ adducts, such as $BF_3$ ethylamine complex.

In one embodiment, the binder composition according to the present invention comprises a catalyst selected from organometallic compounds, such as titanate-based catalysts and stannum based catalysts.

In one embodiment, the binder composition according to the present invention comprises a catalyst selected from chelating agents, such as transition metals, such as iron ions, chromium ions, manganese ions, copper ions and/or from peroxides such as organic peroxides such as dicumyl peroxide.

In one embodiment, the binder composition according to the present invention comprises a catalyst selected from phosphites such as alkyl phosphites, such as aryl phosphites such as triphenyl phosphite.

In one embodiment, the binder composition according to the present invention comprises a catalyst selected from the group of ternary amines such as tris-2,4,6-dimethylaminomethyl phenol.

In one embodiment, the binder composition according to the present invention further comprises a further component (iv) in form of one or more silanes.

In one embodiment, component (iv) is in form of one or more coupling agents, such as organofunctional silanes.

In one embodiment, component (iv) is selected from group consisting of organofunctional silanes, such as primary or secondary amino functionalized silanes, epoxy functionalized silanes, such as polymeric or oligomeric epoxy functionalized silanes, methacrylate functionalized silanes, alkyl and aryl functionalized silanes, urea funtionalised silanes or vinyl functionalized silanes.

In one embodiment, the binder composition according to the present invention further comprises a component (v) in form of one or more components selected from the group of bases, such as ammonia, such as alkali metal hydroxides, such as KOH, such as earth alkaline metal hydroxides, such as $Ca(OH)_2$, such as $Mg(OH)_2$, such as amines or any salts thereof.

In one embodiment, the binder composition according to the present invention further comprises a further

component in form of urea, in particular in an amount of 5 to 40 wt.-%, such as 10 to 30 wt.-%, 15 to 25 wt.-%, based on the dry weight of component (i).

In one embodiment, the binder composition according to the present invention comprises a further component (vi) in the form of one or more reactive or nonreactive silicones.

In one embodiment, the component (vi) is selected from the group consisting of silicone constituted of a main chain composed of organosiloxane residues, especially diphenylsiloxane residues, alkylsiloxane residues, preferably dimethylsiloxane residues, bearing at least one hydroxyl, carboxyl or anhydride, amine, epoxy or vinyl functional group capable of reacting with at least one of the constituents of the binder composition and is preferably present in an amount of 0.025-15 weight-%, preferably from 0.1-10 weight-%, more preferably 0.3-8 weight-%, based on the binder solids.

In one embodiment, the binder composition according to the present invention does not contain an ammonia-oxidised lignin (AOL).

In one embodiment, the binder composition according to the present invention further comprises a further component in form of one or more hydrocarbon oils.

In one embodiment, the binder composition according to the present invention further comprises a further component in form of one or more carbohydrates selected from the group consisting of sucrose, reducing sugars, in particular dextrose, polycarbohydrates, and mixtures thereof, preferably dextrins and maltodextrins, more preferably glucose syrups, and more preferably glucose syrups with a dextrose equivalent value of DE = 30 to less than 100, such as DE = 60 to less than 100, such as DE = 60-99, such as DE = 85-99, such as DE = 95-99.

In one embodiment, the binder composition according to the present invention further comprises a further component in form of one or more carbohydrates selected from the group consisting of sucrose and reducing sugars in an amount of 5 to 50 wt.-%, such as 5 to less than 50 wt.-%, such as 10 to 40 wt.-%, such as 15 to 30 wt.-% based on the dry weight of component (i).

In the context of the present invention, a binder composition having a sugar content of 50 wt.-% or more, based on the total dry weight of the binder components, is considered to be a sugar based binder. In the context of the present invention, a binder composition having a sugar content of less than 50 wt.-%, based on the total dry weight of the binder components, is considered a non-sugar based binder.

In one embodiment, the binder composition according to the present invention further comprises a further component in form of one or more surface active agents that are in the form of non-ionic and/or ionic emulsifiers such as polyoxyethylenes (4) lauryl ether, such as soy lecithin, such as sodium dodecyl sulfate.

In one embodiment, the aqueous binder composition according to the present invention consists essentially of

- a component (i) in form of one or more lignins selected from the group of:

  ◦ kraft lignins having a carboxylic acid group content of 0.03 to 2.0 mmol/g, such as 0.03 to 0.9 mmol/g, such as 0.15 to 2.0 mmol/g, such as 0.15 to 0.9 mmol/g, based on the dry weight of the kraft lignins,

  and/or
- a component (ii) in form of one or more cross-linkers;
- a component (iii) in form of one or more plasticizers;
- a component (iv) in form of one or more coupling agents, such as organofunctional silanes;
- optionally a component in form of one or more compounds selected from the group of bases, such as ammonia, such as alkali metal hydroxides, such as KOH, such as earth alkaline metal hydroxides, such as $Ca(OH)_2$, such as $Mg(OH)_2$, such as amines or any salts thereof;
- optionally a component in form of urea;
- optionally a component in form of one or more reactive or non-reactive silicones;
- optionally one or more hydrocarbon oils;
- optionally one or more surface active agents;
- water.

**A method for producing a mineral fibre product**

The present invention also provides a method for producing a mineral fibre product by binding mineral fibres with the binder composition.

Accordingly, the present invention is also directed to a method for producing a mineral fibre product which comprises the steps of contacting mineral fibres with a binder composition comprising

- a component (i) in form of one or more kraft lignins and/or soda lignins and having a carboxylic acid group content of 0.03 to 2.0 mmol/g, such as 0.03 to 0.9 mmol/g, such as 0.15 to 2.0 mmol/g, such as 0.15 to 0.9 mmol/g, based

on the dry weight of the kraft lignins and/or soda lignins;

- a component (ii) in form of one or more cross-linkers;
- a component (iii) in form of one or more plasticizers,

preferably with the proviso that the composition does not comprise a cross-linker selected from epoxy compounds having a molecular weight MW of 500 or less.

Curing

The web is cured by a chemical and/or physical reaction of the binder components.

In one embodiment, the curing takes place in a curing device.

In one embodiment, the curing is carried out at temperatures from 100 to 300°C, such as 170 to 270°C, such as 180 to 250°C, such as 190 to 230°C.

In one embodiment, the curing takes place in a conventional curing oven for mineral wool production operating at a temperature of from 150 to 300°C, such as 170 to 270°C, such as 180 to 250°C, such as 190 to 230°C.

In one embodiment, the curing takes place for a time of 30 seconds to 20 minutes, such as 1 to 15 minutes, such as 2 to 10 minutes.

In a typical embodiment, curing takes place at a temperature of 150 to 250 °C for a time of 30 seconds to 20 minutes.

The curing process may commence immediately after application of the binder to the fibres. The curing is defined as a process whereby the binder composition undergoes a physical and/or chemical reaction which in case of a chemical reaction usually increases the molecular weight of the compounds in the binder composition and thereby increases the viscosity of the binder composition, usually until the binder composition reaches a solid state.

In a one embodiment, the curing of the binder in contact with the mineral fibres takes place in a heat press.

The curing of a binder in contact with the mineral fibres in a heat press has the particular advantage that it enables the production of high-density products.

In one embodiment the curing process comprises drying by pressure. The pressure may be applied by blowing air or gas through/over the mixture of mineral fibres and binder.

**Mineral fibre product according to the present invention**

The present invention is also directed to a mineral fibre product comprising mineral fibres in contact with a cured binder composition as described above, i.e. in contact with a cured binder resulting from the curing of the aqueous binder composition described above.

The mineral fibres employed may be any of man-made vitreous fibres (MMVF), glass fibres, ceramic fibres, basalt fibres, slag fibres, rock fibres, stone fibres and others. These fibres may be present as a wool product, e.g. like a stone wool product.

Fibre/melt composition

The man-made vitreous fibres (MMVF) can have any suitable oxide composition. The fibres can be glass fibres, ceramic fibres, basalt fibres, slag fibres or rock or stone fibres. The fibres are preferably of the types generally known as rock, stone or slag fibres, most preferably stone fibres.

Stone fibres commonly comprise the following oxides, in percent by weight:

$SiO_2$: 30 to 51
CaO: 8 to 30
MgO: 2 to 25
FeO (including $Fe_2O_3$): 2 to 15
$Na_2O$+$K_2O$: not more than 10
CaO+MgO: 10 to 30

In preferred embodiments the MMVF have the following levels of elements, calculated as oxides in wt%:

$SiO_2$: at least 30, 32, 35 or 37; not more than 51, 48, 45 or 43
$Al_2O_3$: at least 12, 16 or 17; not more than 30, 27 or 25
CaO: at least 8 or 10; not more than 30, 25 or 20
MgO: at least 2 or 5; not more than 25, 20 or 15

FeO (including $Fe_2O_3$): at least 4 or 5; not more than 15, 12 or 10
FeO+MgO: at least 10, 12 or 15; not more than 30, 25 or 20
$Na_2O$+$K_2O$: zero or at least 1; not more than 10
CaO+MgO: at least 10 or 15; not more than 30 or 25
TiO2: zero or at least 1; not more than 6, 4 or 2
$TiO_2$+FeO: at least 4 or 6; not more than 18 or 12
$B_2O_3$: zero or at least 1; not more than 5 or 3
$P_2O_5$: zero or at least 1; not more than 8 or 5
Others: zero or at least 1; not more than 8 or 5

The MMVF made by the method of the invention preferably have the composition in wt.-%:

$SiO_2$ 35 to 50
$Al_2O_3$ 12 to 30
$TiO_2$ up to 2
$Fe_2O_3$ 3 to 12
CaO 5 to 30
MgO up to 15
$Na_2O$ 0 to 15
K2O 0 to 15
$P_2O_5$ up to 3
MnO up to 3
$B_2O_3$ up to 3

Another preferred composition for the MMVF is as follows in wt%:

$SiO_2$ 39-55% preferably 39-52%
$Al_2O_3$ 16-27% preferably 16-26%
CaO 6-20% preferably 8-18%
MgO 1-5% preferably 1-4.9%
$Na_2O$ 0-15% preferably 2-12%
$K_2O$ 0-15% preferably 2-12%
$R_2O$ ($Na_2O$ + $K_2O$) 10-14.7% preferably 10-13.5%
$P_2O_5$ 0-3% preferably 0-2%
$Fe_2O_3$ (iron total) 3-15% preferably 3.2-8%
$B_2O_3$ 0-2% preferably 0-1%
$TiO_2$ 0-2% preferably 0.4-1%
Others 0-2.0%

Glass fibres commonly comprise the following oxides, in percent by weight:

$SiO_2$: 50 to 70
$Al_2O_3$: 10 to 30
CaO: not more than 27
MgO: not more than 12

Glass fibres can also contain the following oxides, in percent by weight:

$Na_2O$+$K_2O$: 8 to 18, in particular $Na_2O$+$K_2O$ greater than CaO+MgO
$B_2O_3$: 3 to 12

Some glass fibre compositions can contain $Al_2O_3$: less than 2%.

Suitable fibre formation methods and subsequent production steps for manufacturing the mineral fibre product are those conventional in the art. Generally, the binder is sprayed immediately after fibrillation of the mineral melt on to the airborne mineral fibres. The aqueous binder composition is normally applied in an amount of 0.1 to 18%, preferably 0.2 to 8 % by weight, of the bonded mineral fibre product on a dry basis.

The spray-coated mineral fibre web is generally cured in a curing oven by means of a hot air stream. The hot air stream may be introduced into the mineral fibre web from below, or above or from alternating directions in distinctive

zones in the length direction of the curing oven.

Typically, the curing oven is operated at a temperature of from about 150°C to about 300°C, such as 170 to 270°C, such as 180 to 250°C, such as 190 to 230°C. Generally, the curing oven residence time is from 30 seconds to 20 minutes, such as 1 to 15 minutes, such as 2 to 10 minutes, depending on, for instance, the product density.

In a typical embodiment, the mineral fibre product according to the present invention is cured at a temperature of 150°C to 250°C for a time of 30 seconds to 20 minutes.

If desired, the mineral wool web may be subjected to a shaping process before curing. The bonded mineral fibre product emerging from the curing oven may be cut to a desired format e.g., in the form of a batt. Thus, the mineral fibre products produced, for instance, have the form of woven and nonwoven fabrics, mats, batts, slabs, sheets, plates, strips, rolls, granulates and other shaped articles which find use, for example, as thermal or acoustical insulation materials, vibration damping, construction materials, facade insulation, reinforcing materials for roofing or flooring applications, as filter stock and in other applications.

In accordance with the present invention, it is also possible to produce composite materials by combining the bonded mineral fibre product with suitable composite layers or laminate layers such as, e.g., metal, glass surfacing mats and other woven or non-woven materials.

The mineral fibre products according to the present invention generally have a density within the range of from 6 to 250 kg/m3, preferably 20 to 200 kg/m3. The mineral fibre products generally have a loss on ignition (LOI) within the range of 0.3 to 18.0 %, preferably 0.5 to 8.0 %.

Although the aqueous binder composition according to the present invention is particularly useful for bonding mineral fibres, it may equally be employed in other applications typical for binders and sizing agents, e.g. as a binder for foundry sand, glass fibre tissue, composites, moulded articles, coatings, such as metal adhesives.

In an alternative embodiment, the binders described above can also be binders for products other than mineral wool products. In one embodiment, the binder compositions described above are binder compositions for binding wood products.

Accordingly, the present invention is also directed to a binder composition, in particular for wood products, comprising components (i), (ii), and (iii), preferably with the proviso defined above.

**Use of a lignin component for the preparation of a binder composition**

The present invention is also directed to the use of a lignin component in form of one or more kraft lignins and having the features as described above for component (i) for the preparation of a binder composition for mineral wool.

In one embodiment, the binder composition is free of phenol and formaldehyde.

In one embodiment, the present invention is directed to the use of a lignin component in the form of one or more kraft lignins having the features of component (i) described above for the preparation of a binder composition, preferably free of phenol and formaldehyde, for mineral wool, whereby this binder composition further comprises components (ii) and (iii) as defined above, preferably with the proviso that the composition does not comprise a cross-linker selected from epoxy compounds having a molecular weight MW of 500 or less.

In one embodiment, the present invention is directed to the use of a lignin component in form of one or more Kraft lignins having the features of component (i) described above for the preparation of a binder composition, preferably free of phenol and formaldehyde, whereby the binder composition further comprises component (iia) as defined above.

The present invention is also directed to the use of a lignin component in form of one or more kraft lignins and having the features as described above for component (i) for the preparation of a binder composition for wood products.

In one embodiment, the binder composition is free of phenol and formaldehyde.

In one embodiment, the present invention is directed to the use of a lignin component in the form of one or more kraft lignins having the features of component (i) described above for the preparation of a binder composition, preferably free of phenol and formaldehyde, for wood products, whereby this binder composition further comprises components (ii) and (iii) as defined above, preferably with the proviso that the composition does not comprise a cross-linker selected from epoxy compounds having a molecular weight MW of 500 or less.

In one embodiment, the present invention is directed to the use of a lignin component in form of one or more kraft lignins having the features of component (i) described above for the preparation of a binder composition, preferably free of phenol and formaldehyde, whereby the binder composition further comprises component (iia) as defined above.

**Examples**

**Examples A - Laboratory tests**

In the following examples, several binders which fall under the definition of the present invention were prepared and compared to binders according to the prior art.

The following properties were determined for the binders according to the present invention and the binders according to the prior art, respectively:

*Binder component solids content*

The content of each of the components in a given binder solution before curing is based on the anhydrous mass of the components.

Kraft lignin was supplied by UPM as BioPiva100™ as dry powder at 67% dry solid matter. Primid XL552 was supplied by EMS-CHEMIE AG, Silane (Momentive VS-142 40% activity), was supplied by Momentive and was calculated as 100% for simplicity. NH4OH 24.7% was supplied by Univar and used in supplied form. PEG 200, urea, KOH pellets, 1,1,1 tris(hydroxymethyl)propane were supplied by Sigma-Aldrich and were assumed anhydrous for simplicity.

*Binder solids*

The content of binder after curing is termed "binder solids".

Disc-shaped stone wool samples (diameter: 5 cm; height 1 cm) were cut out of stone wool and heat-treated at 580 °C for at least 30 minutes to remove all organics. The solids of the binder mixture was measured by distributing a sample of the binder mixture (approx. 2 g) onto a heat treated stone wool disc in a tin foil container. The weight of the tin foil container containing the stone wool disc was weighed before and directly after addition of the binder mixture. Two such binder mixture loaded stone wool discs in tin foil containers were produced and they were then heated at 200 °C for 1 hour. After cooling and storing at room temperature for 10 minutes, the samples were weighed and the binder solids was calculated as an average of the two results.

A binder with a desired binder solids could then be produced by diluting with the required amount of water and 10% aq. silane (Momentive VS-142).

*Mechanical strength studies*

Bar tests

The mechanical strength of the binders was tested in a bar test. For each binder, 16 bars were manufactured from a mixture of the binder and stone wool shots from the stone wool spinning production.

A sample of this binder solution having 15% dry solid matter (16.0 g) was mixed well with shots (80.0 g). The resulting mixture was then filled into four slots in a heat resistant silicone form for making small bars (4×5 slots per form; slot top dimension: length = 5.6 cm, width = 2.5 cm; slot bottom dimension: length = 5.3 cm, width = 2.2 cm; slot height = 1.1 cm). The mixtures placed in the slots were then pressed with a suitably sized flat metal bar to generate even bar surfaces. 16 bars from each binder were made in this fashion. The resulting bars were then cured typically at 225 °C. The curing time was 1 h. After cooling to room temperature, the bars were carefully taken out of the containers. Five of the bars were aged in a water bath at 80 °C for 3 h.

After drying for 3 days, the aged bars as well as five unaged bars were broken in a 3 point bending test (test speed: 10.0 mm/min; rupture level: 50%; nominal strength: 30 $N/mm^2$; support distance: 40 mm; max deflection 20 mm; nominal e-module 10000 $N/mm^2$) on a Bent Tram machine to investigate their mechanical strengths. The bars were placed with the "top face" up (i.e. the face with the dimensions length = 5.6 cm, width = 2.5 cm) in the machine.

**Binder example, reference binder (Phenol-formaldehyde resin modified with urea, a PUF-resol)**

This binder is a phenol-formaldehyde resin modified with urea, a PUF-resol.

A phenol-formaldehyde resin is prepared by reacting 37% aq. formaldehyde (606 g) and phenol (189 g) in the presence of 46% aq. potassium hydroxide (25.5 g) at a reaction temperature of 84°C preceded by a heating rate of approximately 1°C per minute. The reaction is continued at 84 °C until the acid tolerance of the resin is 4 and most of the phenol is converted. Urea (241 g) is then added and the mixture is cooled.

The acid tolerance (AT) expresses the number of times a given volume of a binder can be diluted with acid without the mixture becoming cloudy (the binder precipitates). Sulfuric acid is used to determine the stop criterion in a binder production and an acid tolerance lower than 4 indicates the end of the binder reaction.

To measure the AT, a titrant is produced from diluting 2.5 ml conc. sulfuric acid (>99 %) with 1 L ion exchanged water. 5 mL of the binder to be investigated is then titrated at room temperature with this titrant while keeping the binder in motion by manually shaking it; if preferred, use a magnetic stirrer and a magnetic stick. Titration is continued until a slight cloud appears in the binder, which does not disappear when the binder is shaken.

The acid tolerance (AT) is calculated by dividing the amount of acid used for the titration (mL) with the amount

of sample (mL):

$$AT = (\text{Used titration volume (mL)}) / (\text{Sample volume (mL)})$$

Using the urea-modified phenol-formaldehyde resin obtained, a binder is made by addition of 25% aq. ammonia (90 mL) and ammonium sulfate (13.2 g) followed by water (1.30 kg).

The binder solids were then measured as described above and the mixture was diluted with the required amount of water and silane for mechanical measurements (15 % binder solids solution, 0.5% silane of binder solids).

**Binder example, reference binder (binder based on alkali oxidized lignin)**

3267 kg of water is charged in 6000 l reactor followed by 287 kg of ammonia water (24.7%). Then 1531 kg of Lignin UPM BioPiva 100 is slowly added over a period of 30 min to 45 min. The mixture is heated to 40 °C and kept at that temperature for 1 hour. After 1 hour a check is made on insolubilized lignin. This can be made by checking the solution on a glass plate or a Hegman gauge. Insolubilized lignin is seen as small particles in the brown binder. During the dissolution step will the lignin solution change colour from brown to shiny black. After the lignin is completely dissolved, 1 litre of a foam dampening agent (Skumdaemper 11-10 from NCA-Verodan) is added. Temperature of the batch is maintained at 40 °C. Then addition of 307,5 kg 35% hydrogen peroxide is started. The hydrogen peroxide is dosed at a rate of 200-300 l/h. First half of the hydrogen peroxide is added at a rate of 200 l/h where after the dosage rate is increased to 300 l/h.

During the addition of hydrogen peroxide is the temperature in the reaction mixture controlled by heating or cooling in such a way that a final reaction temperature of 65 °C is reached.

The final product was analysed for the COOH group content, dry solid matter, pH, viscosity and remaining $H_2O_2$.

60g of this oxidized lignin (18.2 % solids) was mixed with 1.4 g Primid XL552 (100 % solids) and 2.8 g PEG200 (100 % solids). 0.6 g Silane (Momentive VS-142 40% activity, 10% in water) and 17.4 g water were added and mixed to yield 15 % solids and then used for test of mechanical properties in bar tests.

Binder compositions according to the present invention

In the following, the entry numbers of the binder example correspond to the entry numbers used in Table 1-1 to 1-4.

Kraft lignin was dissolved in 2l vessel with the following procedure. 645 ml of water and 100 ml NH4OH (24.7%) was mixed, where after 255 g lignin (BioPiva100™) was added slowly over 5 minutes under agitation. This mixture was stirred for two hours at 60 °C. The kraft lignin prepared in this manner was used for the following examples.

Part of the solution was also freeze dried and characterized with the use of 31P NMR. The distribution of functional groups is displayed in Table 1 and Fig. 2. Figure 2 shows 31P NMR spectra of kraft lignin dissolved in ammonia and freeze dried.

**Table 1**

| | Concentration (mmol/g) | | |
|---|---|---|---|
| sample | Aliphatic OH | Phenolic OH | Acid OH |
| kraft lignin dissolved in ammonia and freeze dried | 1.65 | 3.07 | 0.31 |

Example 6

To 60.0 g kraft lignin solution, (15.9 % solids), 2.9 g Primid XL552 (100 % solids) was added and mixed with 0.6 g Silane (Momentive VS-142 40% activity, 10% in water) and 19 g water to yield 15 % solids and then used for test of mechanical properties in bar tests.

Example 12

To 60.0 g kraft lignin solution, (15.9 % solids), 0.7 g Primid XL552 (100 % solids) and 2.5 g PEG200 (100 % solids) were added and mixed with 0.5 g Silane (Momentive VS-142 40% activity, 10% in water) and 4.5 g water to yield 15 % solids and then used for test of mechanical properties in bar tests.

Example 18

To 60.0 g kraft lignin solution, (15.9 % solids), 2.1 g primid XL552 (100 % solids) and 2.5 g PEG200 (100 % solids) were added and mixed with 0.6 g Silane (Momentive VS-142 40% activity, 10% in water) and 12.3 g water to yield 15 % solids and then used for test of mechanical properties in bar tests.

Example 24

To 60.0 g kraft lignin solution, (15.9 % solids), 2.9 g 1,1,1 tris(hydroxymethyl)propane (100 % solids) was added and mixed with 0.8 g water to yield 15 % solids and then used for test of mechanical properties in bar tests.

Example 28

To 60.0 g kraft lignin solution, (15.9 % solids), 1.7 g Primid XL552 (100 % solids) and 2.9 g 1,1,1 tris(hydroxymethyl)propane (100 % solids) were added and mixed with 0.6 g Silane (Momentive VS-142 40% activity, 10% in water) and 9.3 g water to yield 15 % solids and then used for test of mechanical properties in bar tests.

Example 30

To 60.0 g kraft lignin solution, (15.9 % solids), 1.7 g Primid XL552 (100 % solids) and 1.3 g PEG200 (100 % solids) and 1.3 g urea (100 % solids) were added and mixed with 0.6 g Silane (Momentive VS-142 40% activity, 10% in water) and 10.1 g water to yield 15 % solids and then used for test of mechanical properties in bar tests.

Mechanical properties are presented in tables 1.1-1.4. For simplicity, quantities of all other components are recalculated based on 100g of dry lignin powder.

As can be seen from Table 1.1 a combination of crosslinker (Primid XL 552) and plasticizer (PEG 200) is required to achieve high mechanical properties (unaged and aged strength in bar test) that are as good or better compared to reference binder (13,15,18 versus 4 and 9 versus reference binder).

Table 1.2 shows that different plasticizers can be used (15 versus 28) or combination of plasticizers (28 versus 30) and that the PEG 200 is a preferred plasticizer.

Table 1.3 shows that when needed, addition of silane can help achieve aged strength on the same level as reference binders.

Table 1.4 shows that a single base (31) or a combination of bases in different ratios (32 and 33) can be used to achieve equally good mechanical properties.

**Table 1.1**

| Binder composition | reference binder (Phenol-formaldehyde resin modified with urea, a PUF-resol) | reference binder (binder based on alkali oxidized lignin) | 1 | 2 | 4 | 5 | 6 | 7 | 9 | 10 | 11 | 12 | 13 | 15 | 18 |
|---|---|---|---|---|---|---|---|---|---|---|---|---|---|---|---|
| Kraft lignins , g dry lignin powder | | | 100 | 100 | 100 | 100 | 100 | 100 | 100 | 100 | 100 | 100 | 100 | 100 | 100 |
| PEG 200 (g) | | | 0 | 0 | 0 | 0 | 0 | 0 | 26 | 40 | 26 | 26 | 26 | 26 | 26 |
| 1,1,1 tris (hydroxymethyl) propane (g) | | | | | | | | | | | | | | | |
| urea (g) | | | | | | | | | | | | | | | |
| Primid XL552 (g) | | | 0 | 12,4 | 17,4 | 22,3 | 30 | 45 | 0 | 0 | 5 | 7,4 | 12,4 | 17,4 | 22,3 |
| NH4OH (g) | | | 15 | 15 | 15 | 15 | 15 | 15 | 15 | 15 | 15 | 15 | 15 | 15 | 15 |
| KOH (g) | | | | | | | | | | | | | | | |
| Momentive VS 142 (% of binder solids), based on 40% activity | | | 0,5 | 0,5 | 0,5 | 0,5 | 0,5 | 0,5 | 0,5 | 0,5 | 0,5 | 0,5 | 0,5 | 0,5 | 0,5 |
| | | | | | | | | | | | | | | | |
| Binder properties | | | | | | | | | | | | | | | |
| | | | | | | | | | | | | | | | |
| Mechanical strength, unaged (N), bars tests | 350 | 270 | 20 | 10 | 20 | 50 | 70 | 90 | 40 | 100 | 50 | 140 | 210 | 280 | 340 |
| Mechanical strength, aged (N), bar tests | 150 | 130 | 0 | 0 | 10 | 30 | 40 | 50 | 20 | 20 | 30 | 120 | 150 | 190 | 220 |
| | | | | | | | | | | | | | | | |
| Curing temp, °C | 200 | 225 | 225 | 225 | 225 | 225 | 225 | 225 | 225 | 225 | 225 | 225 | 225 | 225 | 225 |

**Table 1.2**

| Binder composition | 15 | 16 | 17 | 24 | 25 | 26 | 27 | 28 | 29 | 30 |
|---|---|---|---|---|---|---|---|---|---|---|
| Kraft lignins , g dry lignin powder | 100 | 100 | 100 | 100 | 100 | 100 | 100 | 100 | 100 | 100 |
| PEG 200 (g) | 26 | 26 | 26 | | | | | | 13 | 13 |
| 1,1,1 tris(hydroxymethyl)propane (g) | | | | 30 | 30 | 40 | 30 | 30 | | |
| urea (g) | | | | | | | | | 13 | 13 |
| Primid XL552 (g) | 17,4 | 23 | 23 | 0 | 0 | 0 | 17,4 | 17,4 | 17,4 | 17,4 |
| NH4OH (g) | 15 | 15 | 15 | 15 | 15 | 15 | 15 | 15 | 15 | 15 |
| KOH (g) | | | | | | | | | | |
| Momentive VS 142 (% of binder solids), based on 40% activity | 0,5 | 0 | 0,5 | 0 | 0,5 | 0,5 | 0 | 0,5 | 0 | 0,5 |
| | | | | | | | | | | |
| Binder properties | | | | | | | | | | |
| | | | | | | | | | | |
| Mechanical strength, unaged (N), bars tests | 280 | 250 | 280 | 30 | 60 | 80 | 150 | 190 | 150 | 220 |
| Mechanical strength, aged (N), bar tests | 190 | 130 | 190 | 20 | 20 | 30 | 70 | 120 | 70 | 140 |
| | | | | | | | | | | |
| Curing temp, °C | 225 | 225 | 225 | 225 | 225 | 225 | 225 | 225 | 225 | 225 |

**Table 1.3**

| Binder composition | reference binder (Phenol-formaldehyde resin modified with urea, a PUF-resol) | reference binder (binder based on alkali oxidized lignin) | 3 | 4 | 8 | 9 | 16 | 17 | 27 | 28 | 29 | 30 |
|---|---|---|---|---|---|---|---|---|---|---|---|---|
| Kraft lignins , g dry lignin powder | | | 100 | 100 | 100 | 100 | 100 | 100 | 100 | 100 | 100 | 100 |
| PEG 200 (g) | | | 0 | 0 | 26 | 26 | 26 | 26 | | | 13 | 13 |
| 1,1,1 tris(hydroxymethyl) propane (g) | | | | | | | | | 30 | 30 | | |
| urea (g) | | | | | | | | | | | 13 | 13 |
| Primid XL552 (g) | | | 17,4 | 17,4 | 0 | 0 | 23 | 23 | 17,4 | 17,4 | 17,4 | 17,4 |
| NH4OH (g) | | | 15 | 15 | 15 | 15 | 15 | 15 | 15 | 15 | 15 | 15 |
| KOH (g) | | | | | | | | | | | | |
| Momentive VS 142 (% of binder solids), based on 40% activity | | | 0 | 0,5 | 0 | 0,5 | 0 | 0,5 | 0 | 0,5 | 0 | 0,5 |
| | | | | | | | | | | | | |
| Binder properties | | | | | | | | | | | | |
| | | | | | | | | | | | | |
| Mechanical strength, unaged (N), bars tests | 350 | 270 | 20 | 20 | 40 | 40 | 250 | 280 | 150 | 190 | 150 | 220 |
| Mechanical strength, aged (N), bar tests | 150 | 130 | 10 | 10 | 10 | 20 | 130 | 190 | 70 | 120 | 70 | 140 |
| | | | | | | | | | | | | |
| Curing temp, °C | 200 | 225 | 225 | 225 | 225 | 225 | 225 | 225 | 225 | 225 | 225 | 225 |

**Table 1.4**

| Binder composition | 31 | 32 | 33 |
|---|---|---|---|
| Kraft lignins , g dry lignin powder | 100 | 100 | 100 |
| PEG 200 (g) | 26 | 26 | 26 |
| 1,1,1 tris(hydroxymethyl)propane (g) | | | |
| urea (g) | | | |
| Primid XL552 (g) | 20 | 20 | 20 |
| NH4OH (g) | 20 | 10 | 10 |
| KOH (g) | | 3,5 | 1,7 |
| Momentive VS 142 (% of binder solids), based on 40% activity | 0,5 | 0,5 | 0,5 |
| | | | |
| Binder properties | | | |
| | | | |
| Mechanical strength, unaged (N), bars tests | 320 | 290 | 310 |
| Mechanical strength, aged (N), bar tests | 220 | 170 | 180 |
| | | | |
| Curing temp, °C | 225 | 225 | 225 |

This overall means, we are able to produce a phenol and formaldehyde-free binder composition with a high content of renewable material based on lignin, which has comparable mechanical properties to the reference systems and can be produced in a simpler and less expensive way.

## Productions-Examples

Comparative example 1:

This binder is a phenol-formaldehyde resin modified with urea, a PUF-resol.

A phenol-formaldehyde resin is prepared by reacting 37% aq. formaldehyde (606 kg) and phenol (189 kg) in the presence of 46% aq. potassium hydroxide (25,5 kg) at a reaction temperature of 84°C preceded by a heating rate of approximately 1°C per minute. The reaction is continued at 84 °C until the acid tolerance of the resin is 4 and most of the phenol is converted. Urea (241 kg) is then added and the mixture is cooled.

The acid tolerance (AT) expresses the number of times a given volume of a binder can be diluted with acid without the mixture becoming cloudy (the binder precipitates). Sulfuric acid is used to determine the stop criterion in a binder production and an acid tolerance lower than 4 indicates the end of the binder reaction.

To measure the AT, a titrant is produced from diluting 2,5 ml conc. sulfuric acid (>99 %) with 1 l ion exchanged water. 5 ml of the binder to be investigated is then titrated at room temperature with this titrant while keeping the binder in motion by manually shaking it; if preferred, use a magnetic stirrer and a magnetic stick. Titration is continued until a slight cloud appears in the binder, which does not disappear when the binder is shaken.

The acid tolerance (AT) is calculated by dividing the amount of acid used for the titration (ml) with the amount of sample (ml):

$$AT = (\text{Used titration volume (ml)}) / (\text{Sample volume (ml)})$$

Using the urea-modified phenol-formaldehyde resin obtained, a binder is made by addition of 25% aq. ammonia (90 l) and ammonium sulfate (13,2 kg) followed by water (1300 kg).

The binder solids were then measured as described above and the mixture was diluted with the required amount of water and silane for mechanical measurements (15 % binder solids solution, 0.5% silane of binder solids).

The binder from this comparative example is used to produce a high density stone wool product, 100 mm, 145 kg/$m^3$. Curing oven temperature was set to 275 °C.

Comparative example 2:

3267 kg of water is charged in 6000 l reactor followed by 287 kg of ammonia water (24.7%). Then 1531 kg of Lignin UPM BioPiva 100 is slowly added over a period of 30 min to 45 min. The mixture is heated to 40 °C and kept at that temperature for 1 hour. After 1 hour a check is made on insolubilized lignin. This can be made by checking the solution on a glass plate or a Hegman gauge. Insolubilized lignin is seen as small particles in the brown binder. During the dissolution step will the lignin solution change color from brown to shiny black.

After the lignin is completely dissolved, 1 liter of a foam dampening agent (Skumdæmper 11-10 from NCA-Verodan) is added. Temperature of the batch is maintained at 40 °C.

Then addition of 307,5 kg 35% hydrogen peroxide is started. The hydrogen peroxide is dosed at a rate of 200-300 l/h. First half of the hydrogen peroxide is added at a rate of 200 l/h where after the dosage rate is increased to 300 l/h.

During the addition of hydrogen peroxide is the temperature in the reaction mixture controlled by heating or cooling in such a way that a final reaction temperature of 65 °C is reached.

The final product was analysed for the COOH group content, dry solid matter, pH, viscosity and remaining $H_2O_2$.

1500 kg of this oxidized lignin (18.2 % solids) was mixed with 36 kg Primid XL552 (100 % solids) and 71 kg PEG200 (100 % solids). 1.5 kg Silane (Momentive VS-142 40% activity) and was added in the end and mixed. Binder prepared in this manner was used for the mineral wool production tests.

The binder from this comparative example is used to produce a high density stone wool product, 100 mm, 145 kg/$m^3$. Curing oven temperature was set to 275 °C.

Comparative example 3:

Comparative example 3 was performed as comparative example 1, however, curing oven temperature was set to 240 °C.

Comparative example 4:

Comparative example 4 was performed as comparative example 2, however, curing oven temperature was set to 240 °C.

Example 1: The stone wool product has been produced by use of binder in example 1, at a curing oven temperature set to 275 °C.

1182 l of water and 96 l $NH_4OH$ (24,7 %) were mixed, where after 512,0 kg lignin (UPM Biopiva 100) was added slowly over 30 minutes at high agitation. Heating the mixture to 60 C was used to facilitate the solubilization. Samples were taken out for analyses of un-dissolved lignin by use of a Hegman Scale and pH measurements. Upon solubilization, 208 kg Primid XL552 solution (pre-made 31 wt% solution in water) and 90 kg PEG 200 (100 % solids) were added and mixed.

The binder from this example is used to produce a high density stone wool product, 100 mm, 145 kg/$m^3$. Curing oven temperature was set to 275 °C.

Example 2 was performed as example 1, however, curing oven temperature was set to 240 °C.

Test of stone wool products:

The high density products have been examined for properties according to the product standard for Factory made mineral wool (MW) products, DS/EN13162:2012 + A1:2015, meaning relevant mechanical properties besides other basic characteristics for stone wool products.

The testing has been performed on slabs, where test specimens according to the dimensional specifications and to the number of test specimens required to get one test result, as stated in EN13162 for each of the different test methods, has been cut out. Each of the stated values for the mechanical properties obtained is an average of more results according to EN13162.

Compression stress

Compression stress at 10% deformation, σ10%, has been determined according to DS/EN 826:2013 Determination of compression behaviour. At least 3 test specimens in 300 × 300 mm in full product thickness (for one result) has been measured after grinding of the surface.

Delamination (tensile strength perpendicular to faces)

Tensile strength perpendicular to faces, omt has been determined according to DS/EN 1607: 2013. At least 3 test specimens in 300 × 300 mm in full product thickness for one result have been measured.
Tensile strength perpendicular to faces has further also been determined for test specimens after exposure to accelerated ageing for evaluation of the ageing persistence, where two different methods have been applied:

Ageing tests (Climate chamber & Autoclave):

Method 1 (Climate chamber):

Test specimens exposed to heat-moisture action for 7, 14 and 28 days at (70 ± 2) °C and (95 ± 5)% relative humidity in climatic chamber (Nordtest method NT Build 434: 1995.05).

Method 2 (Autoclave):

Test specimens exposed to heat-moisture action for 15 minutes at (121 ± 2) °C and (95 ± 5)% relative humidity in pressure boiler.
For testing 5 similar test specimens in 300 × 300 mm in full product thickness are cut out of the same slab, and for one test specimen the tensile strength without pre-treatment is measured.
The other test specimens are exposed to accelerated ageing, according to method 1 in total 3 test specimens: one for 7 days, one for 14 days, one for 28 days of treatment, and according to method 2: one test specimen, after final pre-treatment the measurements have been performed and the ageing resistance determined.

Water absorption

Short term water absorption has been determined according to DS EN 1609:2013, method A, using 4 individual test specimens in 200 × 200 mm in full product thickness to get one result.
Dimensional stability has been determined according to DS/EN 1604:2013, Determination of dimensional stability under specified conditions, however instead of the EN1604 prescribed conditions (48 hrs, 70 °C, 90% RH), the conditions of (70 ± 2)°C and (95 ± 5) % R.H. in climatic chamber for 28 days has been used for evaluation of the thickness after conditioning, e.g. determination of change in thickness, Δεp.
Dimensions of products and test specimens has been performed according to the relevant test methods, DS/EN822:2013, Determination of length and width, and DS/EN823:2013, Determination of thickness.
Determination of binder content is performed according to DS/EN13820:2003 Determination of organic content, where the binder content is defined as the quantity of organic material burnt away at a given temperature, here using (590 ± 20°C) for at least 10 min or more until constant mass. Determination of ignition loss consists of at least 10 g wool corresponding to 8-20 cut-outs (minimum 8 cut-outs) performed evenly distributed over the test specimen using a cork borer ensuring to comprise an entire product thickness.
The binder content is taken as the LOI. The binder includes oil and other binder additives.

**Table 2**

| Delamination, aged in % of unaged | unaged | Climate chamber at 70°C/95% | | | Autoclave 15 min | |
|---|---|---|---|---|---|---|
| | 0 days | 7 days | 14 days | 28 days | | Ign.loss |
| Comp ex. 1 (curing oven temperature set to 275°C) | 100 | 59 | 63 | 62 | 58 | 3,60 |
| Comp ex. 2 (curing oven temperature set to 275°C) | 100 | 75 | 65 | 51 | 67 | 3,38 |

(continued)

| Delamination, aged in % of unaged | unaged | Climate chamber at 70°C/95% | | | Autoclave 15 min | |
|---|---|---|---|---|---|---|
| | 0 days | 7 days | 14 days | 28 days | | Ign.loss |
| Ex 1 (curing oven temperature set to 275°C) | 100 | 78 | 68 | 60 | 62 | 3,60 |
| Comp ex. 3 (curing oven temperature set to 240°C) | 100 | 76 | 73 | 67 | 65 | 3,92 |
| Comp ex. 4 (curing oven temperature set to 240°C) | 100 | 78 | 75 | 51 | 67 | 3,73 |
| Ex 2 (curing oven temperature set to 240°C) | 100 | 71 | 68 | 53 | 65 | 3,61 |

| Delamination, actual values, kPa | unaged | Climate chamber at 70°C/95% | | | Autoclave 15 min | |
|---|---|---|---|---|---|---|
| | 0 days | 7 days | 14 days | 28 days | | Ign.loss |
| Comp ex. 1 (curing oven temperature set to 275°C) | 26 | 15 | 16 | 16 | 15 | 3,60 |
| Comp ex. 2 (curing oven temperature set to 275°C) | 23 | 17 | 15 | 12 | 16 | 3,38 |
| Ex 1 (curing oven temperature set to 275°C) | 30 | 23 | 20 | 18 | 18 | 3,60 |
| Comp ex. 3 (curing oven temperature set to 240°C) | 29 | 23 | 22 | 20 | 19 | 3,92 |
| Comp ex. 4 (curing oven temperature set to 240°C) | 25 | 20 | 19 | 13 | 17 | 3,73 |
| Ex 2 (curing oven temperature set to 240°C) | 26 | 18 | 20 | 14 | 17 | 3,61 |

| Moisture resistance | Climate chamber at 70°C/95% | | | Autoclave 15 min |
|---|---|---|---|---|
| | 7 days | 14 days | 28 days | |
| | % | % | % | % |
| Comp ex. 1 (curing oven temperature set to 275°C) | 0,1 | 0,2 | 0,0 | 0,5 |
| Comp ex. 2 (curing oven temperature set to 275°C) | 0,0 | 0,3 | 0,4 | 0,5 |
| Ex 1 (curing oven temperature set to 275°C) | 0,0 | 0,1 | 0,0 | 0,2 |
| Comp ex. 3 (curing oven temperature set to 240°C) | 0,0 | 0,0 | 0,0 | 0,7 |
| Comp ex. 4 (curing oven temperature set to 240°C) | 0,0 | 0,1 | 0,3 | 0,7 |
| Ex 2 (curing oven temperature set to 240°C) | 0,0 | 0,1 | 0,1 | 0,8 |

| Water absorption | Oil | 24 hours | | 24 hours Top | Bottom |
|---|---|---|---|---|---|
| | % | kg/m2 | | kg/m2 | kg/m2 |
| Comp ex. 1 (curing oven temperature set to 275°C) | 0,2 | 0,2 | | 0,2 | 0,2 |
| Comp ex. 2 (curing oven temperature set to 275°C) | 0,2 | 0,2 | | 0,3 | 0,1 |
| Ex 1 (curing oven temperature set to 275°C) | 0,2 | 0,2 | | 0,2 | 0,1 |
| Comp ex. 3 (curing oven temperature set to 240°C) | 0,2 | 0,2 | | 0,1 | 0,2 |
| Comp ex. 4 (curing oven temperature set to 240°C) | 0,2 | 1,4 | | 2,8 | 0,1 |
| Ex 2 (curing oven temperature set to 240°C) | 0,2 | 2,3 | | 4,6 | 0,1 |

| Compression, sigma 10% | Unaged 0 | Climate chamber at 70°C/ 95% | | | Autoclave std |
|---|---|---|---|---|---|
| | | 7 | 14 | 28 | |
| Comp ex. 1 (curing oven temperature set to 275°C) | 76 | 65 | 65 | 59 | 55 |
| Comp ex. 2 (curing oven temperature set to 275°C) | 71 | 64 | 62 | 52 | 58 |
| Ex 1 (curing oven temperature set to 275°C) | 79 | 73 | 72 | 59 | 65 |
| Comp ex. 3 (curing oven temperature set to 240°C) | 80 | 67 | 67 | 59 | 65 |
| Comp ex. 4 (curing oven temperature set to 240°C) | 78 | 70 | 68 | 58 | 62 |
| Ex 2 (curing oven temperature set to 240°C) | 75 | 69 | 65 | 54 | 59 |

The invention is also directed to the following items:

Item 1. An aqueous binder composition free of phenol and formaldehyde having a pH of ≥ 8 for mineral fibres comprising:

- a component (i) in form of one or more kraft lignins and having a carboxylic acid group content of 0.03 to 0.9 mmol/g, based on the dry weight of the kraft lignins;
- a component (ii) in form of one or more cross-linkers;
- a component (iii) in form of one or more plasticizers,

with the proviso that the composition does not comprise a crosslinker selected from epoxy compounds having a molecular weight $M_W$ of 500 or less.

Item 2. An aqueous binder composition according to item 1, wherein component (i) is having a carboxylic acid group content of 0.15 to 0.6 mmol/g, based on the dry weight of the kraft lignins.

Item 3. An aqueous binder composition according to any of the preceding items, wherein component (i) is in form of one or more kraft lignins having an average carboxylic acid group content of less than 1.8 groups per macromolecule considering the M_n wt. average of component (i), such as less than 1.4 such as less than 1.1 such as less than 0.7.

Item 4. An aqueous binder composition according to any of the preceding items, wherein component (i) is having a nitrogen-content of ≤ 1.2 wt.-%, such as ≤ 0.5 wt.-%, such as ≤ 0.3 wt.-%, based on the dry weight of component (i).

Item 5. An aqueous binder composition according to any of the preceding items, wherein component (i) is having a content of phenolic OH groups of 2.0 to 5.0 mmol/g, such as 2.0 to 4.0 mmol/g, such as 2.5 to 3.5 mmol/g, based on the dry weight of the kraft lignins.

Item 6. An aqueous binder composition according to any of the preceding items, wherein component (i) is having a content of aliphatic OH groups of 0.7 to 3.0 mmol/g such as 0.7 to 2.5 mmol/g such as 1.0 to 2.0 mmol/g, based

on the dry weight of the kraft lignins.

Item 7. An aqueous binder composition according to any of the preceding items, wherein the component (ii) is in form of one or more cross-linkers selected from

- ◦ β-hydroxyalkylamide-cross-linkers and/or oxazoline-cross-linkers, and/or
- ◦ the group consisting of multifunctional organic amines such as an alkanolamine, diamines, such as hexamethyldiamine, and/or
- ◦ epoxy compounds having a molecular weight of more than 500, such as an epoxidised oil based on fatty acid triglyceride or one or more flexible oligomer or polymer, such as a low Tg acrylic based polymer, such as a low Tg vinyl based polymer, such as low Tg polyether, which contains reactive functional groups such as carbodiimide groups, such as anhydride groups, such as oxazoline groups, such as amino groups, such as epoxy groups, and/or
- ◦ one or more cross-linkers selected from the group consisting of polyethylene imine, polyvinyl amine, fatty amines; and/or
- ◦ one more cross-linkers in form of fatty amides; and/or
- ◦ one or more cross-linkers selected from the group consisting of dimethoxyethanal, glycolaldehyde, glyoxalic acid; and/or
- ◦ one or more cross-linkers selected from polyester polyols, such as polycaprolactone; and/or
- ◦ one or more cross-linkers selected from the group consisting of starch, modified starch, CMC; and/or
- ◦ one or more cross-linkers in form of multifunctional carbodiimides, such as aliphatic multifunctional carbodiimides; and/or
- ◦ one or more cross-linkers selected from melamine based cross-linkers, such as a hexakis(methylmethoxy)melamine (HMMM) based cross-linkers.

Item 8. An aqueous binder composition according to any of the preceding items, wherein the component (ii) comprises one or more cross-linkers selected from β-hydroxyalkylamide-cross-linkers and/or oxazoline-cross-linkers.

Item 9. An aqueous binder composition according to any of the preceding items, comprising component (ii) in an amount of 1 to 50 wt.-%, such as 4 to 20 wt.-%, such as 6 to 12 wt.-%, based on the dry weight of component (i).

Item 10. An aqueous binder composition according to any of the preceding items, wherein component (iii) is in form of

- one or more plasticizers selected from the group consisting of fatty alcohols, monohydroxy alcohols, such as pentanol, stearyl alcohol; and/or
- one or more plasticizers selected from the group consisting of alkoxylates such as ethoxylates, such as butanol ethoxylates, such as butoxytriglycol; and/or
- one or more plasticizers in form of propylene glycols; and/or
- one or more plasticizers in form of glycol esters; and/or
- one or more plasticizers selected from the group consisting of adipates, acetates, benzoates, cyclobenzoates, citrates, stearates, sorbates, sebacates, azelates, butyrates, valerates; and/or
- one or more plasticizers selected from the group consisting of phenol derivatives, such as alkyl or aryl substituted phenols; and/or
- one or more plasticizers selected from the group consisting of silanols, siloxanes; and/or
- one or more plasticizers selected from the group consisting of sulfates such as alkyl sulfates, sulfonates such as alkyl aryl sulfonates such as alkyl sulfonates, phosphates such as tripolyphosphates; and/or
- one or more plasticizers in form of hydroxy acids; and/or
- one or more plasticizers selected from the group consisting of monomeric amides, such as acetamides, benzamide, fatty acid amides such as tall oil amides; and/or
- one or more plasticizers selected from the group consisting of quaternary ammonium compounds such as trimethylglycine, distearyldimethylammoniumchloride; and/or
- one or more plasticizers selected from the group consisting of vegetable oils such as castor oil, palm oil, linseed oil, soybean oil; and/or
- tall oil, and/or
- one or more plasticizers selected from the group consisting of hydrogenated oils, acetylated oils; and/or
- one or more plasticizers selected from acid methyl esters; and/or
- one or more plasticizers selected from the group consisting of alkyl polyglucosides, gluconamides, aminoglucoseamides, sucrose esters, sorbitan esters; and/or

- one or more plasticizers selected from the group consisting of polyethylene glycols, polyethylene glycol ethers; and/or
- one or more plasticizers in form of polyols, such as glycerol, such as 1,1,1-Tris(hydroxymethyl)propane; and/or
- triethanolamine.

Item 11. An aqueous binder composition according to any of the preceding items, wherein component (iii) is in form of propylene glycols, phenol derivatives, silanols, siloxanes, hydroxy acids, vegetable oils, polyethylene glycols, polyethylene glycol ethers, triethanolamine, or any mixtures thereof.

Item 12. An aqueous binder composition according to any of the preceding items, wherein component (iii) comprises one or more plasticizers having a boiling point of 100 to 380 °C, more preferred 120 to 300 °C, more preferred 140 to 250 °C.

Item 13. An aqueous binder composition according to any of the preceding items, wherein component (iii) comprises one or more polyethylene glycols having an average molecular weight of 150 to 50000 g/mol, in particular 150 to 4000 g/mol, more particular 150 to 1000 g/mol, preferably 150 to 500 g/mol, more preferably 200 to 400 g/mol.

Item 14. An aqueous binder composition according to any of the preceding items, wherein the component (iii) is present in an amount of 0.5 to 60, preferably 2.5 to 25, more preferably 3 to 15 wt.-%, based on the dry weight of component (i).

Item 15. An aqueous binder composition according to any of the preceding items, comprising a further component (iv) in form of one or more coupling agents, such as organofunctional silanes.

Item 16. An aqueous binder composition according to any of the preceding items, further comprising a component (v) in form of one or more components selected from the group of bases, such as ammonia, such as alkali metal hydroxides, such as KOH, such as earth alkaline metal hydroxides, such as $Ca(OH)_2$, such as $Mg(OH)_2$, such as amines or any salts thereof.

Item 17. An aqueous binder composition according to any of the preceding items, comprising a further component in form of urea, in particular in an amount 5 to 40 wt.-%, such as 10 to 30 wt.-%, such as 15 to 25 wt.-%, based on the dry weight of component (i).

Item 18. An aqueous binder composition according to any of the preceding items, comprising a further component in form of one or more silicone resins.

Items 19. An aqueous binder composition according to any of the preceding items, wherein the aqueous binder composition does not contain an ammonia-oxidized lignin (AOL).

Item 20. A method of producing a bonded mineral fibre product which comprises the step of contacting the mineral fibres with the binder composition according to any of the items 1-19 and curing the binder composition.

Item 21. Mineral fibre product, comprising mineral fibres in contact with a binder resulting from the curing of the binder composition according to any of the items 1-20.

Item 22. Use of a lignin component in form of one or more kraft lignins having the features of component (i) according to any of the items 1 to 6, for the preparation of a binder composition free of phenol and formaldehyde for mineral wool.

## Claims

**1.** An aqueous binder composition having a pH of $\geq 8$ for mineral fibres comprising:

- a component (i) in form of one or more kraft lignins and having a carboxylic acid group content of 0.03 to 0.9 mmol/g, based on the dry weight of the kraft lignins;
- a component (ii) in form of one or more cross-linkers;
- a component (iii) in form of one or more plasticizers.

2. An aqueous binder composition according to claim 1, wherein component (i) is having a carboxylic acid group content of 0.15 to 0.6 mmol/g, based on the dry weight of the kraft lignins.

3. An aqueous binder composition according to any of the preceding claims, wherein component (i) is in form of one or more kraft lignins having an average carboxylic acid group content of less than 1.8 groups per macromolecule considering the M_n wt. average of component (i), such as less than 1.4 such as less than 1.1 such as less than 0.7.

4. An aqueous binder composition according to any of the preceding claims, wherein component (i) is having a nitrogen-content of ≤ 1.2 wt.-%, such as ≤ 0.5 wt.-%, such as ≤ 0.3 wt.-%, based on the dry weight of component (i).

5. An aqueous binder composition according to any of the preceding claims, wherein component (i) is having a content of phenolic OH groups of 2.0 to 5.0 mmol/g, such as 2.0 to 4.0 mmol/g, such as 2.5 to 3.5 mmol/g, based on the dry weight of the kraft lignins.

6. An aqueous binder composition according to any of the preceding claims, wherein component (i) is having a content of aliphatic OH groups of 0.7 to 3.0 mmol/g such as 0.7 to 2.5 mmol/g such as 1.0 to 2.0 mmol/g, based on the dry weight of the kraft lignins.

7. An aqueous binder composition according to any of the preceding claims, wherein the component (ii) is in form of one or more cross-linkers selected from

◦ β-hydroxyalkylamide-cross-linkers and/or oxazoline-cross-linkers, and/or
◦ the group consisting of multifunctional organic amines such as an alkanolamine, diamines, such as hexamethyldiamine, and/or
◦ epoxy compounds having a molecular weight of more than 500, such as an epoxidised oil based on fatty acid triglyceride or one or more flexible oligomer or polymer, such as a low Tg acrylic based polymer, such as a low Tg vinyl based polymer, such as low Tg polyether, which contains reactive functional groups such as carbodiimide groups, such as anhydride groups, such as oxazoline groups, such as amino groups, such as epoxy groups, and/or
◦ one or more cross-linkers selected from the group consisting of polyethylene imine, polyvinyl amine, fatty amines; and/or
◦ one more cross-linkers in form of fatty amides; and/or
◦ one or more cross-linkers selected from the group consisting of dimethoxyethanal, glycolaldehyde, glyoxalic acid; and/or
◦ one or more cross-linkers selected from polyester polyols, such as polycaprolactone; and/or
◦ one or more cross-linkers selected from the group consisting of starch, modified starch, CMC; and/or
◦ one or more cross-linkers in form of multifunctional carbodiimides, such as aliphatic multifunctional carbodiimides; and/or
◦ one or more cross-linkers selected from melamine based cross-linkers, such as a hexakis(methylmethoxy)melamine (HMMM) based cross-linkers,

wherein the component (ii) preferably comprises one or more cross-linkers selected from β-hydroxyalkylamide-cross-linkers and/or oxazoline-cross-linkers.

8. An aqueous binder composition according to any of the preceding claims, comprising component (ii) in an amount of 1 to 50 wt.-%, such as 4 to 20 wt.-%, such as 6 to 12 wt.-%, based on the dry weight of component (i).

9. An aqueous binder composition according to any of the preceding claims, wherein component (iii) is in form of

- one or more plasticizers selected from the group consisting of fatty alcohols, monohydroxy alcohols, such as pentanol, stearyl alcohol; and/or
- one or more plasticizers selected from the group consisting of alkoxylates such as ethoxylates, such as butanol ethoxylates, such as butoxytriglycol; and/or
- one or more plasticizers in form of propylene glycols; and/or
- one or more plasticizers in form of glycol esters; and/or
- one or more plasticizers selected from the group consisting of adipates, acetates, benzoates, cyclobenzoates, citrates, stearates, sorbates, sebacates, azelates, butyrates, valerates; and/or
- one or more plasticizers selected from the group consisting of phenol derivatives, such as alkyl or aryl substituted

phenols; and/or
- one or more plasticizers selected from the group consisting of silanols, siloxanes; and/or
- one or more plasticizers selected from the group consisting of sulfates such as alkyl sulfates, sulfonates such as alkyl aryl sulfonates such as alkyl sulfonates, phosphates such as tripolyphosphates; and/or
- one or more plasticizers in form of hydroxy acids; and/or
- one or more plasticizers selected from the group consisting of monomeric amides, such as acetamides, benzamide, fatty acid amides such as tall oil amides; and/or
- one or more plasticizers selected from the group consisting of quaternary ammonium compounds such as trimethylglycine, distearyldimethylammoniumchloride; and/or
- one or more plasticizers selected from the group consisting of vegetable oils such as castor oil, palm oil, linseed oil, soybean oil; and/or
- tall oil, and/or
- one or more plasticizers selected from the group consisting of hydrogenated oils, acetylated oils; and/or
- one or more plasticizers selected from acid methyl esters; and/or
- one or more plasticizers selected from the group consisting of alkyl polyglucosides, gluconamides, aminoglucoseamides, sucrose esters, sorbitan esters; and/or
- one or more plasticizers selected from the group consisting of polyethylene glycols, polyethylene glycol ethers; and/or
- one or more plasticizers in form of polyols, such as glycerol, such as 1,1,1-Tris(hydroxymethyl)propane; and/or
- triethanolamine,

wherein component (iii) is preferably in form of propylene glycols, phenol derivatives, silanols, siloxanes, hydroxy acids, vegetable oils, polyethylene glycols, polyethylene glycol ethers, triethanolamine, or any mixtures thereof.

**10.** An aqueous binder composition according to any of the preceding claims, wherein component (iii) comprises one or more plasticizers having a boiling point of 100 to 380 °C, more preferred 120 to 300 °C, more preferred 140 to 250 °C, and/or
wherein component (iii) comprises one or more polyethylene glycols having an average molecular weight of 150 to 50000 g/mol, in particular 150 to 4000 g/mol, more particular 150 to 1000 g/mol, preferably 150 to 500 g/mol, more preferably 200 to 400 g/mol.

**11.** An aqueous binder composition according to any of the preceding claims, wherein the component (iii) is present in an amount of 0.5 to 60, preferably 2.5 to 25, more preferably 3 to 15 wt.-%, based on the dry weight of component (i).

**12.** An aqueous binder composition according to any of the preceding claims, comprising a further component (iv) in form of one or more coupling agents, such as organofunctional silanes, and/or

further comprising a component (v) in form of one or more components selected from the group of bases, such as ammonia, such as alkali metal hydroxides, such as KOH, such as earth alkaline metal hydroxides, such as $Ca(OH)_2$, such as $Mg(OH)_2$, such as amines or any salts thereof, and/or
comprising a further component in form of urea, in particular in an amount 5 to 40 wt.-%, such as 10 to 30 wt.-%, such as 15 to 25 wt.-%, based on the dry weight of component (i), and/or
comprising a further component in form of one or more silicone resins, and/or
wherein the aqueous binder composition does not contain an ammonia-oxidized lignin (AOL).

**13.** A method of producing a bonded mineral fibre product which comprises the step of contacting the mineral fibres with the binder composition according to any of the claims 1-12 and curing the binder composition.

**14.** Mineral fibre product, comprising mineral fibres in contact with a binder resulting from the curing of the binder composition according to any of the claims 1-13.

**15.** Use of a lignin component in form of one or more kraft lignins having the features of component (i) according to any of the claims 1 to 6,
for the preparation of a binder composition for mineral wool.

**Fig. 1**

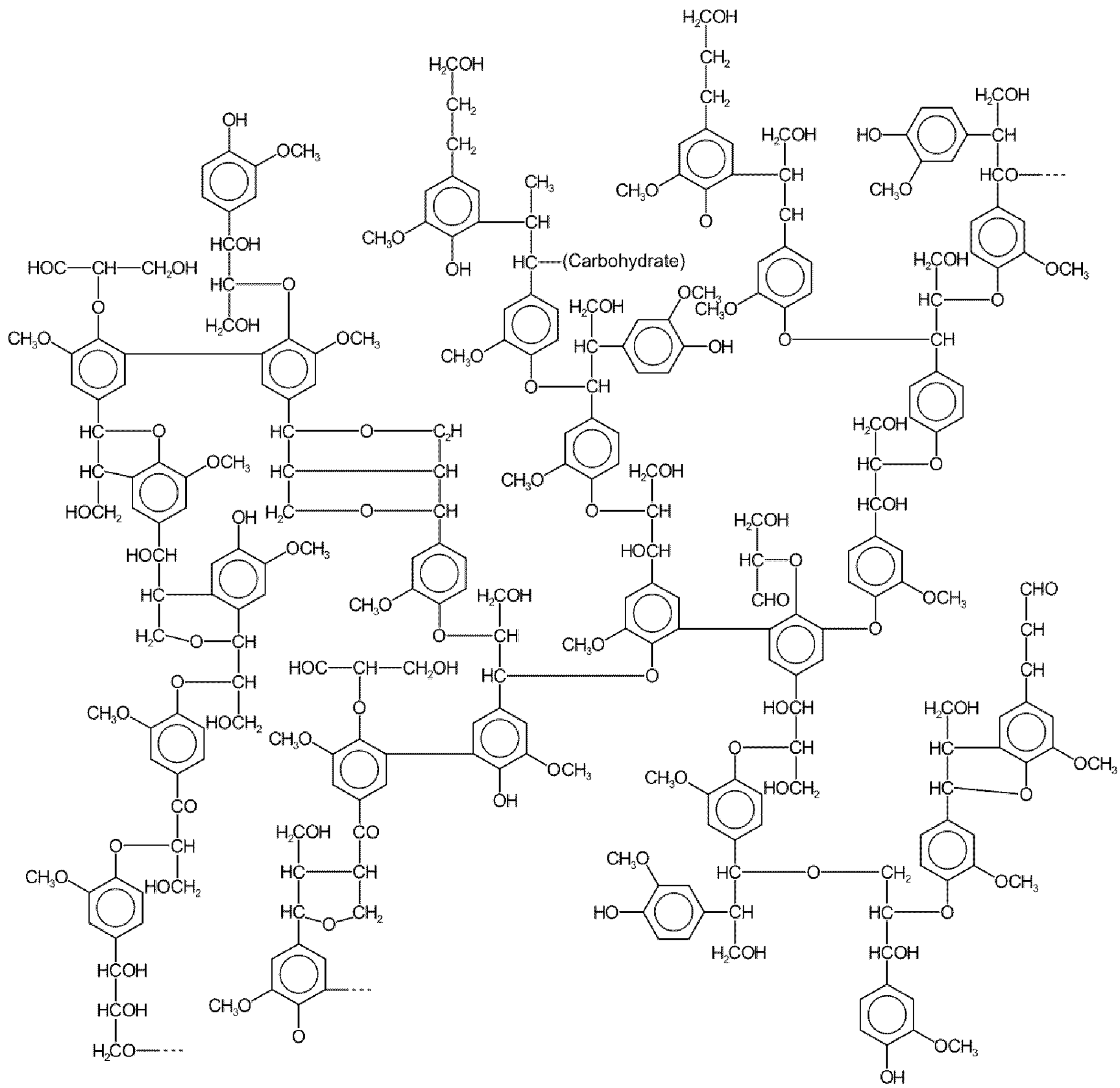

**Fig. 2**

31P NMR spectra of kraft lignins dissolved in ammonia and freeze dried

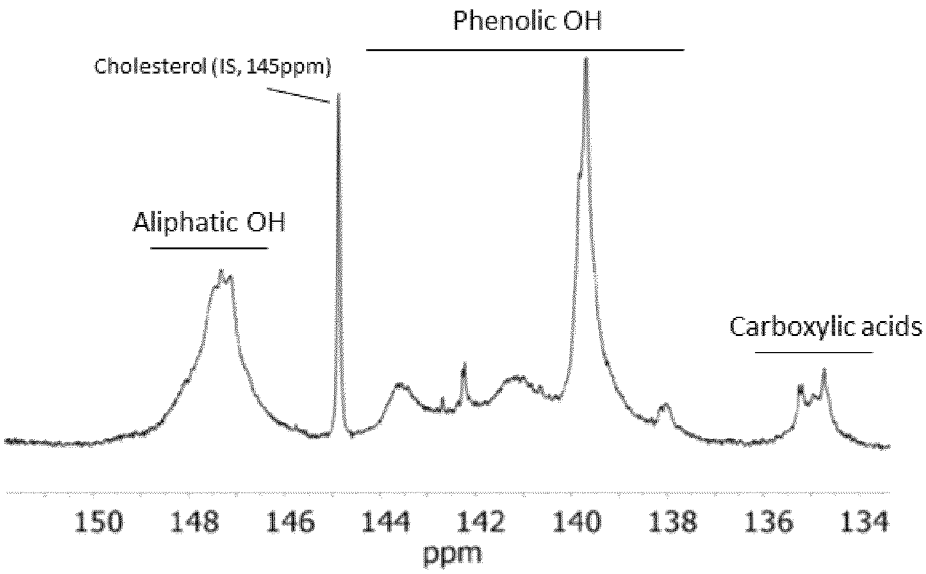

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 583086 A
- EP 990727 A
- EP 1741726 A
- US 5318990 A
- US 20070173588 A
- WO 9936368 A
- WO 0105725 A
- WO 0196460 A
- WO 0206178 A
- WO 2004007615 A
- WO 2006061249 A
- WO 2008023032 A
- US 6818699 B2

### Non-patent literature cited in the description

- *J. Agric. Food Chem.,* vol. 43, 1538-1544